# EUROPÄISCHE PATENTSCHRIFT

(11) **EP 1 836 078 B1**
(45) Veröffentlichungstag und Bekanntmachung des Hinweises auf die Patenterteilung: **29.07.2009**
(21) Anmeldenummer: 05819266.7
(22) Anmeldetag: 16.12.2005
(51) Int. Cl.: B60T 17/08, B21D 39/04

(54) **VERFAHREN ZUR HERSTELLUNG VON AUS WENIGSTENS ZWEI GEHÄUSEBAUTEILEN BESTEHENDEN GEHÄUSEN AUS STAHL VON NI FAHRZEUGEN VERBAUTEN AGGREGATEN**
METHOD FOR PRODUCING METAL HOUSINGS, WHICH ARE COMPRISED OF AT LEAST TWO HOUSING PARTS, OF UNITS MOUNTED IN VEHICLES
PROCEDE DE PRODUCTION DE BOITIERS EN ACIER, DE GROUPES MONTES DANS DES VEHICULES, COMPOSES D'AU MOINS DEUX ELEMENTS DE BOITIER,

(30) Priorität: 17.12.2004 DE 102004060862; 10.11.2005 DE 102005053674
(43) Veröffentlichungstag der Anmeldung: 26.09.2007
(73) Patentinhaber: KNORR-BREMSE SYSTEME FÜR NUTZFAHRZEUGE GMBH, 80809 München (DE)
(72) Erfinder: FANTAZI, Alain, F-14160 Dives sur mer (FR)
(74) Vertreter: Mattusch, Gundula
(86) Internationale Anmeldenummer: PCT/EP2005/013606
(87) Internationale Veröffentlichungsnummer: WO 2006/066832

(56) Entgegenhaltungen:
- EP-A- 1 136 337
- DE-A1- 3 206 489
- DE-A1- 19 830 154
- US-A- 5 676 036
- US-A- 5 849 382

## Beschreibung

### Stand der Technik

Die Erfindung geht aus von einem Verfahren zur Herstellung von aus wenigstens zwei Gehäusebauteilen bestehenden Gehäusen aus Stahl von in Fahrzeugen, insbesondere in Nutzfahrzeugen verbauten Aggregaten, gemäß dem Oberbegriff des Anspruchs 1.

Zur Betätigung von Bremsen in Nutzfahrzeugen werden unter anderem kombinierte pneumatische Betriebsbrems- und Federspeicherbremszylinder verwendet. Ein derartiger Kombizylinder ist in Hintereinanderschaltung eine Kombination eines Betriebsbremszylinders für die Betätigung der Betriebsbremse und eines Federspeicherbremszylinders für die Betätigung der Hilfs- und Federspeicherbremse.

Ein gattungsgemäßes Verfahren ist aus der EP 1 136 337 B1 bekannt, welche einen kombinierten Betriebsbrems- und Federspeicherzylinder eines Nutzfahrzeugs offenbart, bei welchem das Gehäuse des Betriebsbremszylinders und das Gehäuse des Federspeicherbremszylinders durch formschlüssigen Übergriff des Randes des Betriebsbremszylinders durch den Rand des Federspeicherbremszylinders miteinander verbunden sind, was auch als Umbördelung oder einfach nur Bördelung bezeichnet wird.

Solche Bördelungen werden vielfach durch Rollieren erzeugt, d.h. dass der Rand wenigstens eines Gehäusebauteils durch ein umlaufendes Rollwerkzeug plastisch verformt wird. Zuvor muss jedoch zumindest die nach außen weisende Oberfläche der Gehäusebauteile mit einem Korrosionsschutz versehen werden, da Aggregate von Fahrzeugen, wie beispielsweise radnah angeordnete kombinierte Betriebsbrems- und Federspeicherzylinder von Nutzfahrzeugen mit Streusalz durchsetzter Feuchtigkeit ausgesetzt sind. Hierbei verwendete Korrossionsschutzschichten bestehen beispielsweise aus einer aufgespritzten Expoxy-Kunststoffschicht oder einer einfachen Zinkschicht. Es hat sich jedoch herausgestellt, dass durch den Fertigungsschritt der Bördelung die Korrosionsschutzschicht beschädigt werden kann und deshalb die geforderte Korrosionsbeständigkeit nicht erzielt wird, welche beispielsweise darin besteht, dass das Gehäuse eine ununterbrochene Benetzung mit Salzwasser über 400 Stunden lang korrosionsfrei überstehen muss. Demnach beschreibt die US-A-5 849 382 Verrohrungen von Bremssystemen, bei welchen Rohre aus Stahl verwendet werden, welche eine äußere Zinkschicht aufweisen.

Der Erfindung liegt demgegenüber die Aufgabe zugrunde, ein Verfahren zur Herstellung von aus wenigstens zwei Gehäusebauteilen bestehenden Gehäusen von in Fahrzeugen, insbesondere in Nutzfahrzeugen verbauten Aggregaten derart weiter zu bilden, dass es eine Fertigung von die Gehäusebauteile verformenden Bördelungen gestattet, ohne dass deren Korrosionsschutz beeinträchtigt wird.

Erfindungsgemäß wird diese Aufgabe durch die Merkmale des Patentanspruchs 1 gelöst.

### Vorteile der Erfindung

Die Erfindung basiert auf einer vorteilhaften Kombination zweier Verfahrensschritte, nämlich einerseits der Fertigung von Bördelungen mittels eines Stempels und andererseits der Beschichtung der Oberfläche mit einer Zink oder eine Zink beinhaltende Legierung umfassenden Korrosionsschutzschicht und anschließender Passivierung. Es hat sich herausgestellt, dass eine solche Korrosionsschutzschicht nicht beschädigt wird, wenn die Bördelungen mit einem Stempel hergestellt werden.

Der Korrosionsschutz des Zinks sowie der weiteren Legierungsmetalle beruht darauf, dass es noch unedler als das Grundmetall Stahl ist und deshalb als Opferanode fungiert. Solange die deckende Zinkschicht vorhanden ist, bleibt das Grundmetall vor Korrosion geschützt. Fremdmetalle können den Korrosionsschutz der Zinkschicht beeinflussen. Eisen, Nickel oder Cobalt werden deshalb als

Legierungsbestandteile gezielt zur Verbesserung eingesetzt. Das Zink wird seinerseits durch die Passivierung, in der Regel durch eine Chromatierung vor korrosivem Angriff geschützt. Je dicker, dichter und chemisch beständiger die Chromatschicht, um so besser ist die Barrierewirkung.

Infolgedessen ergibt sich eine hohe Korrosionsbeständigkeit eines nach dem Verfahren gemäß der Erfindung hergestellten Gehäuses und auch eine hohe Betriebssicherheit, was insbesondere dann wesentlich ist, wenn es sich um einen Bremszylinder handelt.

Durch die in den Unteransprüchen aufgeführten Maßnahmen sind vorteilhafte Weiterbildungen und Verbesserungen der in den unabhängigen Ansprüchen angegebenen Erfindung möglich.

Bei dem Aggregat, dessen Gehäuse durch das erfindungsgemäße Verfahren gefertigt wird, handelt es sich vorzugsweise um einen Bremszylinder, insbesondere um einen kombinierten Betriebsbrems- und Federspeicherbremszylinder, um einen Lufttrockner oder ein Bremskraftverstärker eines Nutzfahrzeugs, folglich um Aggregate mit wenigstens zweiteiligen, beispielsweise tiefgezogenen Metallblechgehäusen.

Besonders bevorzugt erfolgt die Relativbewegung zwischen dem Stempel und den Gehäusebauteilen in Bezug zu einer Mittelachse des Aggregats in axialer Richtung. Alternativ kann die Relativbewegung in Bezug zur Mittelachse des Aggregats in radialer Richtung erfolgen.

Der Stempel kann als ein- oder mehrteiliger Ring mit einer radial inneren Ausformung ausgebildet sein, welche Druck gegen den Rand des einen Gehäusebauteils und/oder den Rand des anderen Gehäusebauteils ausübt. Im Falle einer axialen Relativbewegung zwischen dem Stempel und den Gehäusehälften kann der Stempel ein- oder mehrteilig ausgebildet sein, im Falle einer radialen Relativbewegung kann er nur mehrteilig sein, beispielsweise dann, wenn die Gehäusebauteile über ihre endseitigen Ränder radial hinausragende Bereiche aufweisen und deshalb mit einem in axialer Richtung geführten, die Gehäusebauteile umgebenden einteiligen Ring kollidieren würden.

Vor Anwendung des Stempels wird beispielsweise ein Gehäusebauteil in einer Einspannvonichtung eingespannt und das andere Gehäusebauteil auf dieses derart aufgesetzt, dass sich die Ränder des Gehäusebauteile überlappen. Die bei der Verformung entstehenden Reaktionskräfte werden dann von den Gehäusebauteilen selbst bzw. von den sich im Inneren befindlichen Strukturen aufgenommen und über die Einspannvorrichtung abgeleitet. In Fällen, in welchen dies möglich ist, kann eine dem Stempel zugeordnete Matrize entbehrlich sein, ansonsten, d.h. bei nicht ausreichend steifen Gehäusebauteilen, muss eine stationäre Matrize vorhanden sein, welche die Reaktionskräfte aufnimmt und zusätzlich der Formgebung der Bördelungen dienen kann, indem sie ihrerseits mit entsprechenden Ausformungen versehen ist.

Um die bei der Verformung auftretenden Kräfte gering zu halten, kann der Rand des einen Gehäusebauteils vor der Anwendung des Stempels zu einer nach radial außen ragenden Schulter vorgeformt sein. Dies kann bereits im Rahmen eines vorangehenden Tiefziehprozesses erfolgt sein. Eine besonders gute Festigkeit der Bördel-Verbindung ergibt sich, falls diese Schulter einen hinterschnittenen Querschnitt aufweist.

Einen besonders guten Korrosionsschutz erhält man, wenn Korrosionsschutzschicht reines Zink, eine Zink/Eisen-Legierung oder eine alkalische Zink/Nickel-Legierung aufweist und die Passivierung eine Chromatierung beinhaltet. Um die Europäische Richtlinie 2000/53/CE der EU zu erfüllen, sollen chrom(VI)haltige (sechswertiges Chrom) Lösungen vermieden werden.

### Zeichnungen

Ein Ausführungsbeispiel der Erfindung ist in der Zeichnung dargestellt und in der nachfolgenden Beschreibung näher erläutert. In der Zeichnung zeigt :
- Fig.1: eine Halbquerschnittsdarstellung einer kombinierten Betriebsbrems-und Federspeicherbremsvorrichtung, welche gemäß einer bevorzugten Ausführungsform des Verfahrens der Erfindung gefertigt wurde;
- Fig.2: eine schematische Querschnittsdarstellung der kombinierten Betriebsbrems- und Federspeicherbremsvorrichtung von Fig.1 während eines Fertigungsschrittes;
- Fig.3: eine schematische Querschnittsdarstellung der kombinierten Betriebsbrems- und Federspeicherbremsvorrichtung von Fig.1 während eines weiteren Fertigungsschrittes;
- Fig.4: eine schematische Querschnittsdarstellung der kombinierten Betriebsbrems- und Federspeicherbremsvorrichtung von Fig.1 während eines weiteren Fertigungsschrittes.

### Beschreibung des Ausführungsbeispiels

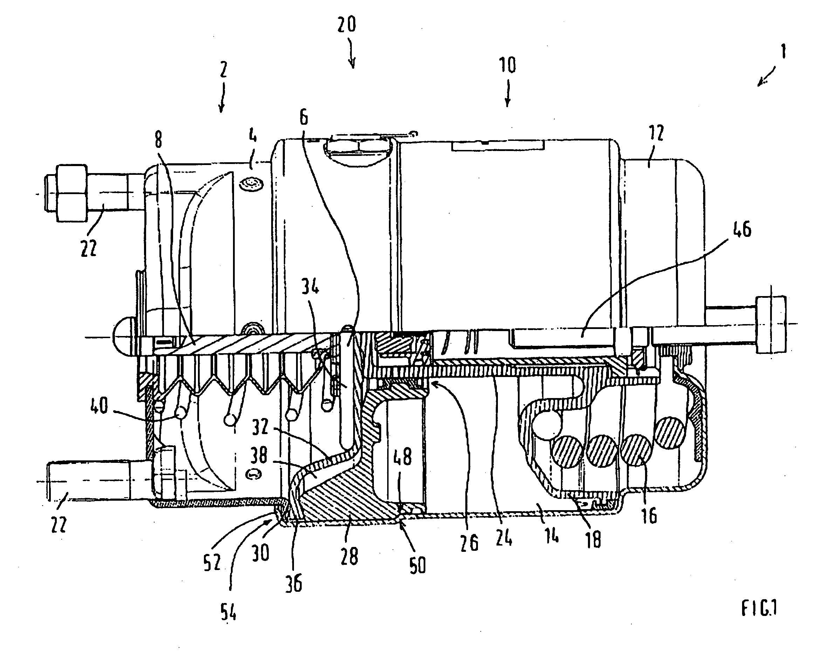

In Fig.1 ist eine bereits fertig gestellte kombinierte Betriebsbrems- und Federspeicherbremsvorrichtung 1 gemäß einer bevorzugten Ausführungsform der Erfindung gezeigt. Diese umfasst eine Betriebsbremsvorrichtung 2 mit einem Betriebsbremszylinder 4 aus Stahl, in dem ein pneumatisch beaufschlagbarer Betriebsbremskolben 6 geführt ist, welcher über eine Betriebsbremskolbenstange 8 beispielsweise eine aus Maßstabsgründen nicht gezeigte Scheibenbremse eines Nutzfahrzeugs betätigt. Weiterhin ist eine Federspeicherbremseinrichtung 10 mit einem Federspeicherbremszylinder 12 aus Stahl vorhanden, in welchem ein durch pneumatischen Druck in einer Federspeicherbremskammer 14 gegen die Federkraft einer Speicherfeder 16 spannbarer Federspeicherbremskolben 18 geführt ist, durch welchen der Betriebsbremskolben 6 in Bremszuspannrichtung beaufschlagbar ist. Der Betriebsbremszylinder 4 und der Federspeicherbremszylinder 12 bilden hintereinander koaxial angeordnet einen Kombibremszytinder 20. Weiterhin ragen vom Betriebsbremszylinder 4 kopfseitig Befestigungsbolzen 22 aus Stahl weg, um den Kombibremszytinder 20 am Fahrzeug befestigen zu können.

Eine Federspeicherbremskolbenstange 24 des Federspeicherbremskolbens 18 durchragt dichtend eine Durchgangsöffnung 26 in einer Trennwand 28 zwischen dem Federspeicherbremszylinder 12 und dem Betriebsbremszylinder 4 und kann mit ihrer Stirnfläche am Betriebsbremskolben 6 anschlagen. Dieser kann eine außenrandseitig zwischen die Trennwand 28 und einer radial äußeren Schulter 30 am Rand des Betriebsbremszylinders 4 eingespannte und axial bewegliche Membran 32 sowie eine zentrale, mit der Membran 32 verbundene Kolbenscheibe 34 beinhalten.

Die Schulter 30 ist vorzugsweise um mehr als 90 Grad umgebogen, so dass sich eine schräge Kontaktfläche zur Membran 32 hin ergibt. Andererseits ist auch die Trennwand 28 an ihrem radial äußeren Rand mit einer schrägen Kontaktfläche versehen, so dass sich dazwischen ein nach radial außen keilförmig erweiternder Querschnitt ergibt, in welchem der komplementär ausgeformte äußere Rand 36 der Membran 32 formschlüssig gehalten ist.

In bekannter Weise kann außerdem der Federspeicherbremskolben 18 gegen die Wirkung der Speicherfeder 16 durch Belüften der Federspeicherbremskammer 14 in Lösestellung gebracht werden. Weiterhin kann durch Belüften einer Betriebsbremskammer 38, welche sich zwischen der Trennwand 28 und dem Betriebsbremskolben 6 erstreckt, Letzterer gegen die Wirkung einer sich einerseits am Betriebsbremskolben 6 und andererseits an einer Stirnwand des Betriebsbremszylinders 4 abstützenden Rückholfeder 40 in Zuspannstellung gebracht werden. Nicht zuletzt ist innerhalb der Federspeicherbremskolbenstange 24 eine mechanische Löseeinrichtung 46 integriert, mit welcher die Federspeicherbremse bei Druckausfall not- oder hüfsgelöst werden kann.

Vor diesem Hintergrund ist die Funktionsweise der kombinierten Betriebsbrems-und Federspeicherbremsvorrichtung 1 wie folgt :

Ausgehend von der in Fig.1 gezeigten Situation, in der sowohl die Federspeicherbremse als auch die Betriebsbremse gelöst sind, wird zum Zuspannen der Betriebsbremse die Betriebsbremskammer 38 belüftet, woraufhin einerseits der Betriebsbremskolben 6 von der Trennwand 28 weg nach links verschoben wird. Die Verschiebung des Betriebsbremskolbens 6 bewirkt, dass die Scheibenbremse zugespannt wird.

Hingegen sorgt ein Entlüften der Betriebsbremskammer 38 dafür, dass der Betriebsbremskolben 6 durch die Rückholfeder 40 in Lösestellung, d.h. in Fig.1 nach rechts verschoben wird und an der Stirnfläche der Federspeicherbremskolbenstange 24 bzw. an der Trennwand 28 anschlägt.

Zum längeren Halten der Betriebsbremse in Zuspannstellung, d.h. wenn sich der pneumatische Druck in der Betriebsbremskammer 38 nach einiger Zeit abgebaut hat oder die Betriebsbremskammer 38 gezielt entlüftet wurde, soll nun die Federspeicherbremse zugespannt werden. Dazu wird die Federspeicherbremskammer 14 entlüftet, woraufhin die Speicherfeder 16 den Federspeicherbremskolben 18 zusammen mit der Federspeicherbremskolbenstange 24 in Fig.1 nach links drängt, welche stirnseitig mit dem Betriebsbremskolben 6 in Kontakt steht. Dieser Bewegung folgt der Betriebsbremskolben 6 sowie die mit ihm gekoppelte Betriebsbremskolbenstange 8, welche die Scheibenbremse in Zuspannstellung bringt bzw. hält.

Im Rahmen des Verfahrens zur Herstellung des Kombibremszylinders 20 wird, bevor der Betriebsbremszylinder 4 und der Federspeicherbremszylinder 12 mit den oben beschriebenen Bauelementen und Baugruppen bestückt werden, zumindest auf die nach außen weisenden Oberflächen der beiden Zylinder 4, 12 und auf die für eine sichere Befestigung des Kombibremszylinders 20 wesentlichen Befestigungsbolzen 22 zunächst eine Zink oder eine Zink beinhaltende Legierung umfassende Korrosionsschutzschicht aufgebracht.

Der Korrosionsschutz des Zinks sowie der weiteren Legierungsmetalle beruht darauf, dass es noch unedler als das Grundmetall Stahl ist und deshalb als Opferanode fungiert. Solange die deckende Zinkschicht vorhanden ist, bleibt das Grundmetall vor Korrosion geschützt. Fremdmetalle können den Korrosionsschutz der Zinkschicht beeinflussen. Eisen, Nickel oder Cobalt können deshalb als Legierungsbestandteile gezielt zur Verbesserung eingesetzt werden. Das Zink wird seinerseits durch die Passivierung, vorzugsweise durch eine Chromatierung vor korrosivem Angriff geschützt.

Ein besonders guter Korrosionsschutz ergibt sich, wenn Korrosionsschutzschicht reines Zink, eine Zink/Eisen-Legierung oder eine alkalische Zink/Nickel-Legierung aufweist und die Passivierung eine Chromatierung beinhaltet. Um die Europäische Richtlinie 2000/53/CE der EU zu erfüllen, sollen chrom(VI)haltige (sechswertiges Chrom) Lösungen vermieden werden.

Dann werden der Betriebsbremszylinder 4 und der Federspeicherbremszylinder 12 mit den oben beschriebenen Bauelementen und Baugruppen bestückt. Dazu wird beispielsweise die Trennwand 28 von oben her in den Federspeicherbremszylinder 12 axial eingeschoben bis sie mit einem an ihrer radial äußeren Umfangsfläche ausgebildeten Absatz 48 einen komplementären Absatz 50 in der Mantelwand des Federspeicherbremszylinders 12 kontaktiert, wodurch ein axialer Anschlag gebildet wird.

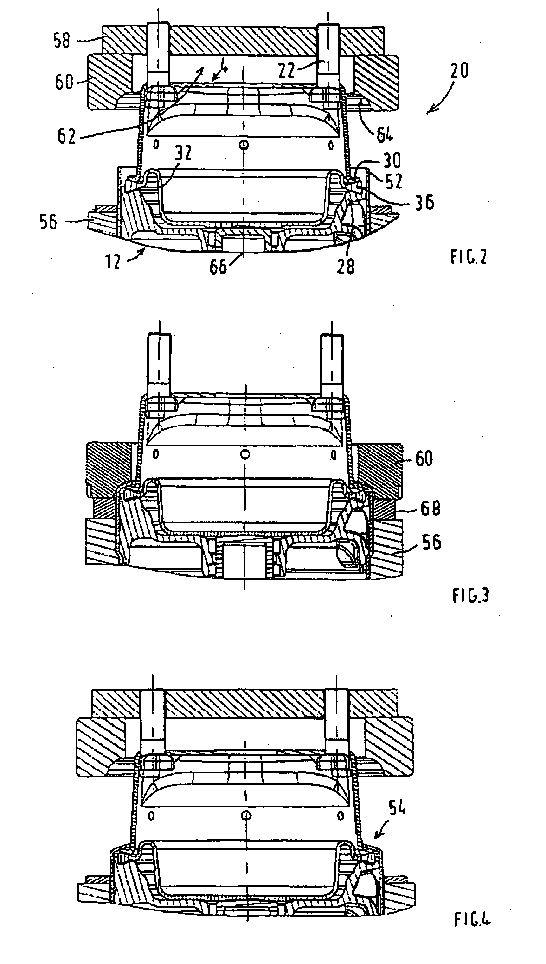

Die Verbindung zwischen den beiden Zylindern 4, 12 wird durch eine Bördelung 54 hergestellt, indem zunächst beispielsweise der Federspeicherbremszylinder 12 mit seiner Mantelfläche radial in eine Einspannvorrichtung 56 eingespannt und der Betriebsbremszylinder 4 auf den Federspeicherbremszylinder 12 derart aufgesetzt wird, dass sich deren Ränder 30, 52 überlappen, d.h. der gerade endseitige Rand 52 des Federspeicherbremszylinders 12 umschließt einerseits den als radial äußere Schulter 30 geformten Rand des Betriebsbremszylinders 4 radial, andererseits findet auch eine axiale Überlappung statt, weil der gerade Rand 52 des Federspeicherbremszylinders 12 axial um ein Stück über die Schulter 30 des Betriebsbremszylinders 4 hinausragt. Der Betriebsbremszylinder 4 wird in dieser Stellung beispielsweise einerseits durch seine Befestigungsbolzen 22 fixiert und zentriert, welche durch Durchgangsöffnungen einer stationären Kopfplatte 58 als Teil der Einspannvorrichtung 56 gesteckt sind. Andererseits ist der Rand 36 der Membran 32 des Betriebsbremskolbens 6 bereits zwischen der Trennwand 28 und der Schulter 30 positioniert. Diese Ausgangssituation ist in Fig.2 dargestellt.

Die Bördelung 54 wird durch Relativbewegung eines Stempels 60 gegenüber den zuvor gegeneinander ausgerichteten Betriebsbrems- und Federspeicherbremszylindern 4, 12 erzeugt, der beispielsweise nur den zunächst noch geraden Rand 52 des Federspeicherbremszylinders 12 plastisch umformt. Hierzu ist der Stempel 60 vorzugsweise als einteiliger Ring mit einer zentralen Durchgangsöffnung 62 ausgebildet, welche gerade so groß ist, dass er ohne Kollision den Betriebsbremszylinder 4 umschließen und an ihm axial entlang bewegt werden kann. Weiterhin weist der Stempel 60 an seiner zum Kombibremszylinder 20 hin weisenden Stirnfläche eine radial innere, vorzugsweise gerundete Ausformung 64 auf, welche Druck gegen den Rand 52 des Federspeicherbremszylinders 12 ausüben kann, um ihn unter plastischer Verformung gegen die Schulter 30 des Betriebsbremszylinders 4 zu pressen und ihn an diese anzuformen. Hierzu erfolgt eine Bewegung des Stempels 60 in Bezug zu einer Mittelachse 66 des Kombibremszylinders 20 in axialer Richtung. Diese Situation zeigt Fig.3, wobei der Stempel 60 in seiner Endlage mit seiner Stirnfläche einen an der gegenüberliegenden Stirnfläche der Einspannvorrichtung 56 aufliegenden Stopperring 68 kontaktiert, dessen Höhe vom gewünschten Verformungsgrad abhängt und fallweise angepasst werden kann.

In Fig.4 ist der Stempel 60 wieder außer Eingriff mit dem Kombibremszylinder 20, wobei die Schulter 30 des Betriebsbremszylinders 4 vom Rand 52 des Federspeicherbremszylinders 14 formschlüssig übergriffen wird und gleichzeitig Druck auf den radial äußeren Rand 36 der Membran 32 ausübt, welche hierdurch ebenfalls formschlüssig fixiert wird. Weiterhin wird die Trennwand 28 hierdurch im Federspeicherbremszylinder 12 formschlüssig gehalten, da sich die Absätze 48, 50 an der radial äußeren Umfangsfläche der Trennwand 28 und an der Mantelwand des Federspeicherbremszylinders 14 axial kontaktieren, welche auch die Reaktionskräfte aufnehmen. Mit einer einzigen Bewegung des Stempels 60 werden folglich vier separate Bauteile miteinander formschlüssig verbunden: Der Betriebsbremszylinder 4, die Membran 32, der Federspeicherbremszylinder 12 und die Trennwand 28.

Im Falle einer axialen Stempelbewegung kann der Stempel 60 ein- oder mehrteilig ausgebildet sein. Weiterhin sind auch Fälle denkbar, in denen die Gehäusebauteile über ihre endseitigen Ränder radial hinausragende Bereiche aufweisen und deshalb mit einem in axialer Richtung geführten Ringstempel kollidieren würden. In diesen Fällen muss der Stempel 60 in seiner Umfangserstreckung wenigstens einmal geteilt sein, wobei dann die Stempelbögen eine radiale Bewegung in Bezug zur Mittelachse 66 des Kombibremszylinders 20 ausführen. Nicht zuletzt könnte der Stempel 60 auch den Rand 30 des Betriebsbremszylinders 4 umformen oder auch beide Ränder 30, 52. Weiterhin könnte die Schulter 30 des Betriebsbremszylinders 4 mit dem Rand 52 des Federspeicherbremszylinders 12 durch die Bördelung 54 ohne Zwischenordnung einer Trennwand 28 gefertigt sein. Der Federspeicherbremszylinder 12 könnte beispielsweise an seinem zum Betriebsbremszylinder weisenden Stirnfläche durch eine mit ihm verbundene oder einstückig ausgeführte Wandung verschlossen sein.

Das oben beschriebene Verfahren ist nicht auf die Herstellung von Kombibremszylindem 20 beschränkt. Vielmehr können mit ihm Gehäuse jeglicher Aggregate in Fahrzeugen und Nutzfahrzeugen wie Bremszylinder, Lufttrockner oder Bremskraftverstärker gefertigt werden.

### Bezugszahlenliste

- 1: Betriebsbrems - und Federspeicherbremsvorrichtung
- 2: Betriebsbremseinrichtung
- 4: Betriebsbremszylinder
- 6: Betriebsbremskolben
- 8: Betriebsbremskolbenstange
- 10: Federspeicherbremseinrichtung
- 12: Federspeicherbremszylinder
- 14: Federspeicherbremskammer
- 16: Speicherfeder
- 18: Federspeicherbremskolben
- 20: Kombibremszylinder
- 22: Befestigungsbolzen
- 24: Federspeicherbremskolbenstange
- 26: Durchgangsöffnung
- 28: Trennwand
- 30: Schulter
- 32: Membran
- 34: Kolbenscheibe
- 36: Rand
- 38: Betriebsbremskammer
- 40: Rückholfeder
- 46: Löseeinrichtung
- 48: Absatz
- 50: Absatz
- 52: Rand
- 54: Bördelung
- 56: Einspannvorrichtung
- 58: Kopfplatte
- 60: Stempel
- 62: Durchgangsöffnung
- 64: Ausformung
- 66: Mittelachse
- 68: Stopperring

## Patentansprüche

1. Verfahren zur Herstellung von aus wenigstens zwei Gehäusebauteilen (4, 12) bestehenden Gehäusen (20) aus Stahl von in Fahrzeugen, insbesondere in Nutzfahrzeugen verbauten Aggregaten, beinhaltend den Schritt des Herstellens eines formschlüssigen Übergriffs eines Randes (30) des einen Gehäusebauteils (4) durch den Rand (52) des anderen Gehäusebauteils (12), **gekennzeichnet durch**
a) Aufbringen einer Zink oder eine Zink beinhaltende Legierung umfassenden Korrosionsschutzschicht zumindest auf eine nach außen weisende Oberfläche wenigstens eines Gehäusebauteils (4, 12) mit anschließender Passivierung,
b) Herstellen des formschlüssigen Übergriffs eines Randes (30) des einen Gehäusebauteils (4) **durch** den Rand (52) des anderen Gehäusebauteils (12) mittels Relativbewegung der zuvor gegeneinander ausgerichteten Gehäusebauteile (4, 12) gegenüber einem Stempel (60), welcher den Rand (30) des einen Gehäusebauteils (4) und/oder den Rand (52) des anderen Gehäusebauteils (12) plastisch umformt.

2. Verfahren nach Anspruch 1, **dadurch gekennzeichnet, dass** die Relativbewegung in Bezug zu einer Mittelachse (66) des Aggregats in axialer Richtung erfolgt.

3. Verfahren nach Anspruch 1, **dadurch gekennzeichnet, dass** die Relativbewegung in Bezug zu einer Mittelachse (66) des Aggregats in radialer Richtung erfolgt.

4. Verfahren nach wenigstens einem der vorhergehenden Ansprüche, **dadurch gekennzeichnet, dass** der Stempel (60) als ein- oder mehrteiliger Ring mit einer Ausformung (64) ausgebildet ist, welche Druck gegen den Rand des einen Gehäusebauteils und/oder den Rand (52) des anderen Gehäusebauteils (12) ausübt.

5. Verfahren nach wenigstens einem der vorhergehenden Ansprüche, **dadurch gekennzeichnet, dass** das Aggregat ein Bremszylinder (20), ein Lufttrockner oder ein Bremskraftverstärker eines Nutzfahrzeugs ist.

6. Verfahren nach wenigstens einem der vorhergehenden Ansprüche, **dadurch gekennzeichnet, dass** vor Anwendung des Stempels (60) ein Gehäusebauteil (12) eingespannt und das andere Gehäusebauteil (4) auf dieses derart aufgesetzt wird, dass sich die Ränder (30, 52) der Gehäusebauteile (4, 12) überlappen.

7. Verfahren nach Anspruch 6, **dadurch gekennzeichnet, dass** der Rand (30) des einen Gehäusebauteils (4) vor der Anwendung des Stempels (60) zu einer nach radial außen ragenden Schulter (30) vorgeformt ist.

8. Verfahren nach wenigstens einem der Ansprüche 6 oder 7, **dadurch gekennzeichnet, dass** der Rand (52) des anderen Gehäusebauteils (12) vor der Anwendung des Stempels (60) in Bezug zur Mittelachse (66) gerade ist.

9. Verfahren nach wenigstens einem der vorhergehenden Ansprüche, **dadurch gekennzeichnet, dass** die Korrosionsschutzschicht reines Zink, eine Zink/Eisen-Legierung oder eine alkalische Zink/Nickel-Legierung aufweist.

10. Verfahren nach Anspruch 9, **dadurch gekennzeichnet, dass** die Passivierung eine Chromatierung beinhaltet.

## Claims

1. Method for manufacturing steel housings (20), composed of at least two housing components (4, 12), of assemblies installed in vehicles, in particular commercial vehicles, including the step of producing a positive overlap of an edge (30) of one housing component (4) by the edge (52) of the other housing component (12),
**characterised by**
a) the application of an anticorrosive layer comprising zinc or an alloy containing zinc to an external surface of at least one housing component (4, 12) with subsequent passivation,
b) the production of a positive overlap of an edge (30) of one housing component (4) by the edge (52) of the other housing component (12) by means of relative movement between the housing components (4, 12) which have previously been aligned with respect to one another and a die (60) which plastically shapes the edge (30) of one housing component (4) and/or the edge (52) of the other housing component (12).

2. Method according to claim 1, **characterised in that** the relative movement occurs in the axial direction with respect to a central axis (66) of the assembly.

3. Method according to claim 1, **characterised in that** the relative movement occurs in the radial direction with respect to a central axis (66) of the assembly.

4. Method according to one or more of the preceding claims, **characterised in that** the die (60) is designed as a single- or multi-component ring with a recess (64) which exerts pressure against the edge of the one housing component and/or on the edge (52) of the other housing component (12).

5. Method according to one or more of the preceding claims, **characterised in that** the assembly is a brake cylinder (20), an air dryer or a brake booster of a commercial vehicle.

6. Method according to one or more of the preceding claims, **characterised in that** before the application of the die (60), one housing component (12) is clamped and the other housing component (4) is fitted thereto in such a way that the edges (30, 52) of the housing components (4, 12) overlap.

7. Method according to claim 6, **characterised in that** before the application of the die (60), the edge (30) of one housing component (4) is preshaped to form a shoulder (30) which projects radially outwards.

8. Method according to one or more of claim 6 or 7, **characterised in that** before the application of the die (60), the edge (52) of the other housing component (12) is straight with respect to the central axis (66).

9. Method according to one or more of the preceding claims, **characterised in that** the anticorrosive layer contains zinc, a zinc/iron alloy or an alkaline zinc/nickel alloy.

10. Method according to claim 9, **characterised in that** the passivation includes a chromating process.

## Revendications

1. Procédé de fabrication de boîtiers (20) en acier constitués d'au moins deux composants (4, 12) de boîtier, notamment dans des groupes montés dans des véhicules utilitaires, comprenant le stade de production d'un empiétement à complémentarité de forme d'un bord de l'un des composants (4) de boîtier et du bord (52) de l'autre composant (12) de boîtier,
**caractérisé par**
a) en ce que l'on dépose une couche de protection vis-à-vis de la corrosion, comprenant du zinc ou un alliage contenant du zinc, au moins sur une surface tournée vers l'extérieur d'au moins un composant (4, 12) de boîtier avec passivation ensuite,
b) on produit l'empiètement à complémentarité de forme d'un bord (30) de l'un des composants (4) de boîtier et du bord (52) de l'autre composant (12) de boîtier au moyen d'un mouvement relatif des composants (4, 12) de boîtier dirigés d'abord l'un contre l'autre par rapport à un poinçon (60) qui déforme plastiquement le bord (30) de l'un des composants (4) de boîtier et/ou le bord (52) de l'autre composant (12) de boîtier.

2. Procédé suivant la revendication 1, **caractérisé en ce que** l'on effectue un mouvement relatif en direction axial par rapport à un axe (66) médian du groupe.

3. Procédé suivant la revendication 1, **caractérisé en ce que** l'on effectue un mouvement relatif en direction radial par rapport à un axe (66) médian du groupe.

4. Procédé suivant au moins l'une des revendications précédentes, **caractérisé en ce que** l'on forme le poinçon (60) sous la forme d'un anneau en une pièce ou en plusieurs pièces ayant une déformation (64) qui applique de la pression sur le bord de l'un des composants de boîtier et/ou sur le bord (52) de l'autre composant (12) de boîtier.

5. Procédé suivant au moins l'une des revendications précédentes, **caractérisé en ce que** le groupe est un cylindre (20) de frein, un sécheur d'air où un dispositif d'assistance de frein.

6. Procédé suivant au moins l'une des revendications précédentes, **caractérisé en ce qu'**avant d'appliquer le poinçon (60), on bloque un composant (12) de boîtier et on met l'autre composant (4) de boîtier sur celui-ci de manière à ce que les bords (30, 52) des composants (4, 12) de boîtier se chevauchent.

7. Procédé suivant la revendication 6, **caractérisé en ce que** l'on déforme à l'avance le bord (30) de l'un des composants (4) de boîtier, avant l'application du poinçon (60), en un épaulement (30) faisant saillie radialement vers l'extérieur.

8. Procédé suivant au moins l'une des revendications 6 ou 7, **caractérisé en ce que** le bord (52) de l'autre composant (12) de boîtier est rectiligne par rapport à l'axe (66) médian avant l'application du poinçon (60).

9. Procédé suivant au moins l'une des revendications précédentes, **caractérisé en ce que** la couche de protection vis-à-vis de la corrosion comprend du zinc pur, un alliage de zinc et de fer ou un alliage alcalin de zinc et de nickel.

10. Procédé suivant la revendication 9, **caractérisé en ce que** la passivation comporte une chromatisation.
